# EUROPEAN PATENT SPECIFICATION

(11) **EP 4 354 614 B1**
(45) Date of publication and mention of the grant of the patent: **07.01.2026**
(21) Application number: 21965885.3
(22) Date of filing: 30.11.2021
(51) Int. Cl.: H01M 50/209, H01M 50/249

(54) **BATTERY CELL, BATTERY, ELECTRICAL APPARATUS, AND MANUFACTURING METHOD OF BATTERY CELL**
BATTERIEZELLE, BATTERIE, ELEKTRISCHE VORRICHTUNG UND HERSTELLUNGSVERFAHREN FÜR BATTERIEZELLE
ÉLÉMENT DE BATTERIE, BATTERIE, DISPOSITIF ÉLECTRIQUE ET PROCÉDÉ DE FABRICATION D'ÉLÉMENT DE BATTERIE

(43) Date of publication of application: 17.04.2024
(73) Proprietor: Contemporary Amperex Technology (Hong Kong) Limited, Central, Central And Western District (HK)
(72) Inventor: LIU, Qiang, Ningde, Fujian 352100 (CN); XIAO, Haihe, Ningde, Fujian 352100 (CN); ZHANG, Xiaowen, Ningde, Fujian 352100 (CN); LI, Baiqing, Ningde, Fujian 352100 (CN); JIN, Haizu, Ningde, Fujian 352100 (CN)
(74) Representative: Lorenz Seidler Gossel Part. mbB
(86) International application number: PCT/CN2021/134382
(87) International publication number: WO 2023/097441

(56) References cited:
- CN-A- 106 575 722
- CN-U- 212 659 597
- DE-A1- 102011 016 799
- JP-A- 2012 174 433
- JP-A- H09 213 284
- US-A1- 2009 092 891
- US-A1- 2013 115 494
- US-A1- 2013 115 494

## Description

### TECHNICAL FIELD

The present application relates to the technical field of batteries, and in particular, to a battery cell, a battery, an electrical apparatus, and a manufacturing method of a battery cell.

### BACKGROUND ART

Due to the advantages of high energy density, high power density, large number of cycles, long storage time, and the like, lithium-ion batteries are widely used in all kinds of devices.

During development of battery technologies, assembling is also a non-negligible issue in addition to improvement of performance of batteries. CN 212 659 597 U discloses a battery cell comprising a housing, which has a U-shape form, a cover body, which has a U-form as well and closes on the housing while surrounding a sealed accommodating cavity, and an electrode assembly, which includes two tabs having opposite polarities. The cover body comprises two poles or terminal posts electrically connected to the tabs and either arranged both at the same side of the cover body or at separate sides. Further prior art can be found in US 2013/115494 A1.

### SUMMARY OF THE INVENTION

In view of the above issue, the present application provides a battery cell, a battery, an electrical apparatus, and a manufacturing method of a battery cell, so as to reduce the assembling difficulty of the battery cell.

In a first aspect, the present application provides a battery cell. The battery cell includes a case, an electrode assembly, an end cover, a first terminal post, and a second terminal post; the case includes two side walls perpendicular to a first direction and spaced apart, and a bottom wall perpendicular to a second direction and connected to the two side walls; the two side walls and the bottom wall are enclosed to form an accommodating cavity; the case is provided with a first side opening and a second side opening which are opposite to each other in a third direction, and a top opening opposite to the bottom wall; the first direction, the second direction, and the third direction are perpendicular to one another; the electrode assembly is arranged in the accommodating cavity and includes a main body part, and a first tab and a second tab which extend out of the main body part and have opposite polarities; and the end cover is connected with the case to cover the first side opening, the second side opening, and the top opening to close the case. The first terminal post and the second terminal post are arranged on the end cover; the first terminal post is electrically connected to the first tab; and the second terminal post is electrically connected to the second tab.

In the technical solution of the embodiments of the present application,the case includes three wall surfaces: the bottom wall and the two opposite side walls. During assembling, the two side walls of the case can be inclined outwards relative to the bottom wall to form a flaring, and a moving direction of the electrode assembly does not need to be strictly perpendicular to an opening surface when the electrode assembly enters the case, thereby lowering the assembling difficulty. Moreover, the case includes three openings, so that the electrode assembly can enter the case in three directions. The assembling flexibility is high, which further lowers the assembling difficulty.

In some embodiments, the case is integrally formed by being bent at connections between the side walls and the bottom wall. The case includes the bottom wall and the two opposite side walls, so that the case can be formed by a simple bending process, which saves stretching, aluminum extrusion, and other processes during machining of the existing case, and reduces the manufacturing cost.

According to the present invention, the first tab and the second tab respectively extend from two ends of the main body part in the third direction; the end cover includes a first end cover provided with the first terminal post and a second end cover provided with the second terminal post; and the first end cover and the second end cover are arranged in a split manner. The first tab and the second tab respectively extend out of the two ends of the main body part, and the first end cover and the second end cover are arranged in the split manner, which can facilitate that the terminal posts and tabs on the end cover rotate to achieve assembling on the case after being welded.

In some embodiments, the first end cover covers the first side opening and at least part of the top opening, and the second end cover covers the second side opening and at least part of the top opening; and the first end cover is connected to the second end cover. The first end cover covers the first side opening and at least part of the top opening, and the second end cover covers the second side opening and at least part of the top opening. In this way, the end cover is composed of two parts to cover all the openings of the case, thereby simplifying the welding step during the assembling.

In some embodiments, the first end cover and the second end cover are arranged symmetrically. The first end cover and the second end cover are arranged symmetrically, that is, a length of a second branch of the first end cover and a length of a fourth branch of the second end cover are equal. In this way, the first end cover and the second end cover have the same structural dimensions, and can be manufactured uniformly during manufacturing, thereby reducing the manufacturing cost.

In some embodiments, the first end cover includes a first branch covering the first side opening, and a second branch covering at least part of the top opening; the second end cover includes a third branch covering the second side opening and a fourth branch covering at least part of the top opening; the first branch is provided with the first terminal post; the third branch is provided with the second terminal post; and the second branch is connected to the fourth branch. The first terminal post on the first end cover is connected to the first tab, and the second terminal post on the second end cover is connected to the second tab; and the second branch is connected to the fourth branch to achieve assembling between the end cover and the electrode assembly, so that the assembling process is simple.

In some embodiments, a connecting end of the second branch is in concave-convex fit with a connecting end of the fourth branch. The connecting end of the second branch is in concave-convex fit with the connecting end of the fourth branch to achieve precise positioning and matching of the second branch and the fourth branch, thereby preventing electrolyte leakage.

In some embodiments, a connection between the first branch and the second branch is a rounded corner; and/or, a connection between the third branch and the fourth branch is a rounded corner. The setting of the rounded corners can avoid damage to the electrode assembly and injury to assembling personnel during the connection and assembling of the first end cover and the electrode assembly.

In some embodiments, a connection between the first branch and/or the third branch and the bottom wall is a right angle. The connection between the first branch and/or the third branch and the bottom wall is set to be the right angle, which avoids formation of rounded corners at intersection positions of the case formed by a traditional stretching process, and reduces interference between the rounded corners and the electrode assembly; the space utilization rate of the case can be improved; and the energy density of the battery cell can be increased.

In some embodiments, both the first tab and the second tab extend out of the main body part towards one side of the top opening; the end cover is of a groove structure and includes two side cover parts covering the two side openings and a top cover part covering the top opening; and the first terminal post and the second terminal post are both arranged on the top cover part. The first tab and the second tab extend out of one side of the main body part, so that the end cover of the groove structure can be directly assembled with the electrode assembly without setting the end cover into two separate structures, thus reducing the step of connecting the two split structures of the end cover and simplifying the assembling process.

In some embodiments, connections between the side walls and the bottom wall of the case are rounded corners. A bent part of the case is set as a rounded corner, which is convenient for machining and avoids damage to the electrode assembly.

In a second aspect, the embodiments of the present application provide a battery, including the above battery cell.

In a third aspect, the present application provides an electrical apparatus, including the above battery. The battery is configured to supply electric energy.

In a fourth aspect, the present application provides a manufacturing method of a battery cell, including the following steps:
providing a case, wherein the case includes two side walls perpendicular to a first direction and spaced apart, and a bottom wall perpendicular to a second direction and connected to the two side walls, wherein the two side walls and the bottom wall are enclosed to form an accommodating cavity; the case is provided with a first side opening and a second side opening which are opposite to each other in a third direction, and a top opening opposite to the bottom wall; the first direction, the second direction, and the third direction are perpendicular to one another;
providing an electrode assembly, an end cover, a first terminal post, and a second terminal post, wherein the electrode assembly includes a main body part, and a first tab and a second tab which extend from two ends of the main body part in the second direction and have opposite polarities; the first terminal post and the second terminal post are arranged on the end cover; and
the first terminal post is electrically connected to the first tab, and the second terminal post is electrically connected to the second tab; the end cover comprises a first end cover provided with the first terminal post and a second end cover provided with the second terminal post; the first end cover and the second end cover are arranged in a split manner; the electrode assembly is placed in the accommodating cavity of the case; and the end cover is connected to the case to enable the end cover to close the case.

The above descriptions are only a summary of the technical solutions of the present application. In order to be able to understand the technical means of the present application more clearly, the technical means can be implemented according to the content of the specification. Furthermore, in order to make the above and other objectives, features and advantages of the present application more comprehensible, specific implementations of the present application are exemplified below.

### DESCRIPTION OF DRAWINGS

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.
Fig. 1 is a schematic structural view of a vehicle according to some embodiments of the present application;
Fig. 2 is an exploded schematic structural view of a battery according to some embodiments of the present application;
Fig. 3 is a perspective schematic structural view of a battery cell according to some embodiments of the present application;
Fig. 4 is a front schematic structural view of a case according to some embodiments of the present application;
Fig. 5 is a side schematic structural view of a case according to some embodiments of the present application;
Fig. 6 is a side schematic structural view of a first end cover according to some embodiments of the present application;
Fig. 7 is a side schematic structural view of a second end cover according to some embodiments of the present application;
Fig. 8 is a front schematic structural view of a battery cell according to some embodiments of the present application;
Fig. 9 is a sectional schematic structural view along direction A-A in Fig. 8;
Fig. 10 is a top schematic structural view of a battery cell according to some embodiments of the present application;
Fig. 11 is a sectional schematic structural view along direction B-B in Fig. 10;
Fig. 12 is a partially enlarged schematic structural view of a portion M in Fig. 11;
Fig. 13 is a partially enlarged schematic structural view of a portion N in Fig. 11;
Fig. 14 is a side schematic structural view of a battery cell according to some embodiments of the present application;
Fig. 15 is a partially enlarged schematic structural view of a portion P in Fig. 14;
Fig. 16 is a perspective schematic structural view of a battery cell according to some examples not encompassed by the wording of the claims;
Fig. 17 is a sectional schematic structural view of the battery cell shown in Fig. 16; and
Fig. 18 is a flow diagram of a manufacturing method of a battery cell according to some embodiments of the present application.

In the drawings, the drawings are not drawn to actual scale.

### Description of reference numerals:

vehicle 1000;
battery 100, controller 200, motor 300;
box 10, first part 11, second part 12;
battery cell 20, case 21, side wall 211, intersection position 211a, bottom wall 212, electrode assembly 22, main body part 221, first tab 222, second tab 223, end cover 23, first end cover 231, first branch 2311, second branch 2312, second end cover 232, third branch 2321, fourth branch 2322, first terminal post 24, second terminal post 25;
first direction X, second direction Z, and third direction Y.

### DETAILED DESCRIPTION

Unless otherwise defined, all technical and scientific terms used herein have the same meaning as commonly understood by those skilled in the art of the present application. The terms used herein are intended only for the purpose of describing specific embodiments and are not intended to limit the present application. The terms "include" and "has/have", as well as any variations thereof, in the specification and claims of the present application, as well as the accompanying drawings, are intended to encompass non-exclusive inclusion.

In the description of the embodiments of the present application, the technical terms "first", "second", and the like are only for distinguishing different objects, and may not be understood as indicating or implying the relative importance or implicitly indicating the number, specific order or primary and secondary relations of the technical features indicated. In the description of the embodiments of the present application, "plurality" means more than two, unless otherwise expressly and specifically defined.

Reference to "an embodiment" herein means that a particular feature, structure or characteristic described in conjunction with an embodiment may be included in at least one embodiment of the present application. The phrase shown in various locations in the specification may not necessarily refer to a same embodiment, and is not an independent or optional embodiment exclusive from another embodiment. It is explicitly and implicitly understood by those skilled in the art that the embodiments described herein may be combined with other embodiments.

In the descriptions of the embodiments of the present application, the term "and/or" only describes an association relation of associated objects and represents that three relations may exist. For example, A and/or B may represent three situations: A exists alone; A and B exist simultaneously; and B exists alone. In addition, the character "/" herein usually indicates an "or" relation between associated objects.

In the descriptions of the embodiments of the present application, the term "plurality" refers to more than two (including two), and similarly, "a plurality of groups" refers to more than two groups (including two groups); and "a plurality of sheets" refers to more than two sheets (including two sheets).

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the descriptions of the embodiments of the present application, unless otherwise expressly specified and limited, the technical terms "mount," "connect", "connection", "fix" and the like should be understood in a broad sense, such as, a fixed connection, a detachable connection, an integrated connection, a mechanical connection, an electrical connection, a direct connection, an indirect connection through an intermediate medium, an internal communication of two elements, or interaction between two elements. Those of ordinary skill in the art can understand the specific meanings of the above terms in the embodiments of the present application according to specific situations.

An existing battery cell generally includes a case, an end cover, and an electrode assembly accommodated in the case, and the case is filled with electrolyte. The electrode assembly is a component of the battery cell where an electrochemical reaction occurs. The case is an assembly that forms an internal environment of the battery cell. The end cover is a component covering openings of the case to isolate the internal environment of the battery cell from an external environment. In some existing battery cells, side surfaces and a bottom of a case are all closed, and a top is provided with an opening. To assemble the battery cell, it is necessary to put the electrode assembly into the case from the opening in the top to complete the assembling. In some other battery cells, side surfaces of a case is closed, and a top and a bottom are respectively provided with openings. To assemble the battery cell, it is also necessary to put the electrode assembly into the case from the opening in the top or the opening in the bottom to complete the assembling. The inventors of the present application have found that in the assembling process of these battery cells, since the four side surfaces of the case are closed, it is necessary to strictly control a moving direction of the electrode assembly to be perpendicular to an opening surface of the case when the electrode assembly enters the case, to avoid scratches caused by contact between the electrode assembly and the case, so the assembling difficulty is relatively high. Moreover, since the four side surfaces of the case are all closed, part of an assembling space needs to be reserved during manufacturing of the case, resulting in loss of energy density. Moreover, since the above case is generally formed by stretching, it is inevitable to set rounded corners at intersection positions of four edges of the case. For an electrode assembly of a laminated structure, edge interference will occur between an internal rounded corner and an edge of a electrode plate. As a result, during the design of the electrode assembly of the laminated structure, a width and length of the electrode plate need to be reduced to avoid the rounded corners inside the case, which will cause loss of energy density.

In order to improve the problem of relatively high assembling difficulty of the battery cell above, the inventors have found that two side walls of the case of the battery cell can be removed, so that the case itself only includes three wall surfaces: a bottom wall and two opposite side walls. During assembling, the two side walls of the case can be inclined outwards relative to the bottom wall to form a flaring, and a moving direction of the electrode assembly does not need to be strictly perpendicular to openings when the electrode assembly enters the case, thereby lowering the assembling difficulty. Furthermore, the case only includes the bottom wall and the two opposite side walls, so that the case can be formed by a simple bending process, which saves stretching, aluminum extrusion, and other processes during machining of the existing case, and reduces the manufacturing cost.

The battery cell disclosed in the embodiments of the present application can be used, but not limited to, in an electrical apparatus such as a vehicle, a ship, or an aircraft. A power supply system of the electrical apparatus can be composed of the battery cell, the battery, and the like disclosed in the present application.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and the like. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

For the convenience of description, the following embodiments are illustrated by taking an example in which the electrical apparatus according to an embodiment of the present application is a vehicle 1000.

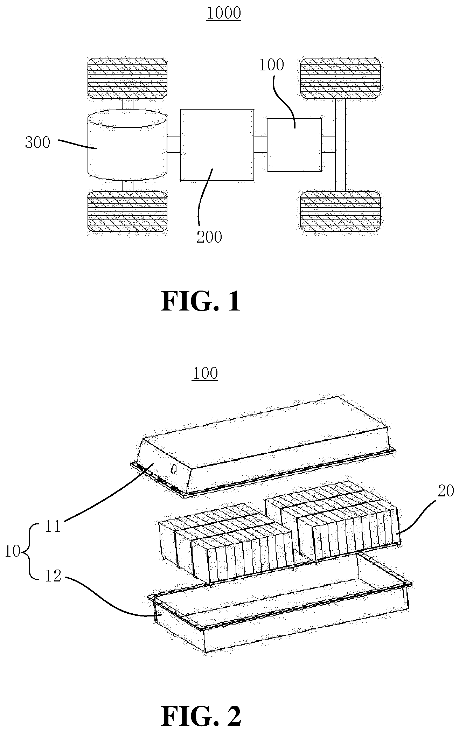

Refer to Fig. 1, Fig. 1 is a schematic structural view of a vehicle 1000 according to some embodiments of the present application. The vehicle 1000 may be a fuel vehicle, a gas vehicle, or a new energy vehicle, and the new energy vehicle may be a allelectric vehicle, a hybrid electric vehicle, an extended range electric vehicle, and the like. A battery 100 is arranged inside the vehicle 1000. The battery 100 may be arranged at a bottom or head or tail of the vehicle 1000. The battery 100 may be configured to power the vehicle 1000. For example, the battery 100 may be used as an operating power supply of the vehicle 1000. The vehicle 1000 may further include a controller 200 and a motor 300. The controller 200 is configured to control the battery 100 to power the motor 300, for example, to meet the demand for working power during starting, navigation or driving of the vehicle 1000.

In some embodiments of the present application, the battery 100 not only may serve as the operating power supply of the vehicle 1000, but also may serve as a driving power supply of the vehicle 1000, thus replacing or partially replacing fuel or natural gas to provide driving power for the vehicle 1000.

Refer to Fig. 2, Fig. 2 is an exploded view of a battery 100 according to some embodiments of the present application. The battery 100 includes a box 10 and battery cells 20. The battery cells 20 are accommodated in the box 10. The box 10 is configured to provide an accommodating space for the battery cells 20, and the box 10 may be of various structures. In some embodiments, the box 10 may include a first part 11 and a second part 12. The first part 11 and the second part 12 are covered by each other. The first part 11 and the second part 12 jointly define an accommodating space for accommodating the battery cells 20. The second part 12 may be of a hollow structure with an opening in one end. The first part 11 may be of a plate-like structure. The first part 11 covers the opening side of the second part 12, so that the first part 11 and the second part 12 jointly define the accommodating space. The first part 11 and the second part 12 may also be of hollow structures with openings in one side, and the opening side of the first part 11 covers the opening side of the second part 12. Of course, the box 10 formed by the first part 11 and the second part 12 may be of various shapes, such as a cylinder or a cuboid.

In the battery 100, there may be a plurality of battery cells 20. The plurality of battery cells 20 may be connected in series or parallel or in parallel-series connection. The parallel-series connection means that the plurality of battery cells 20 are connected in both series and parallel. The plurality of battery cells 20 may be directly connected in series, in parallel or parallel-series connection. The whole composed of the plurality of battery cells 20 is then accommodated in the box 10. Of course, the battery 100 may also be in the form of battery modules composed of a plurality of battery cells 20 connected in series or parallel or in parallel-series connection, and then the plurality of battery modules are connected in series or in parallel or in parallel-series connection to form a whole which is accommodated in the box 10. The battery 100 may further include other structures. For example, the battery 100 may further include a bus component for electrically connecting the plurality of battery cells 20.

Each battery cell 20 may be a secondary battery or a primary battery, or may be a lithium-sulfur battery, a sodium-ion battery or a magnesium-ion battery, but is not limited thereto. Each battery cell 20 may be cylindrical, flat, cuboid, or in other shapes.

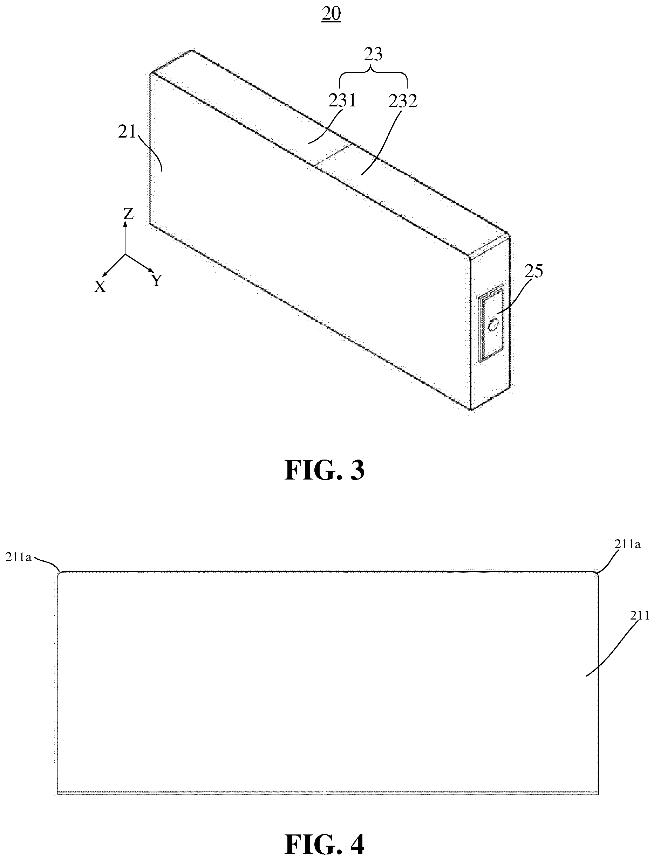

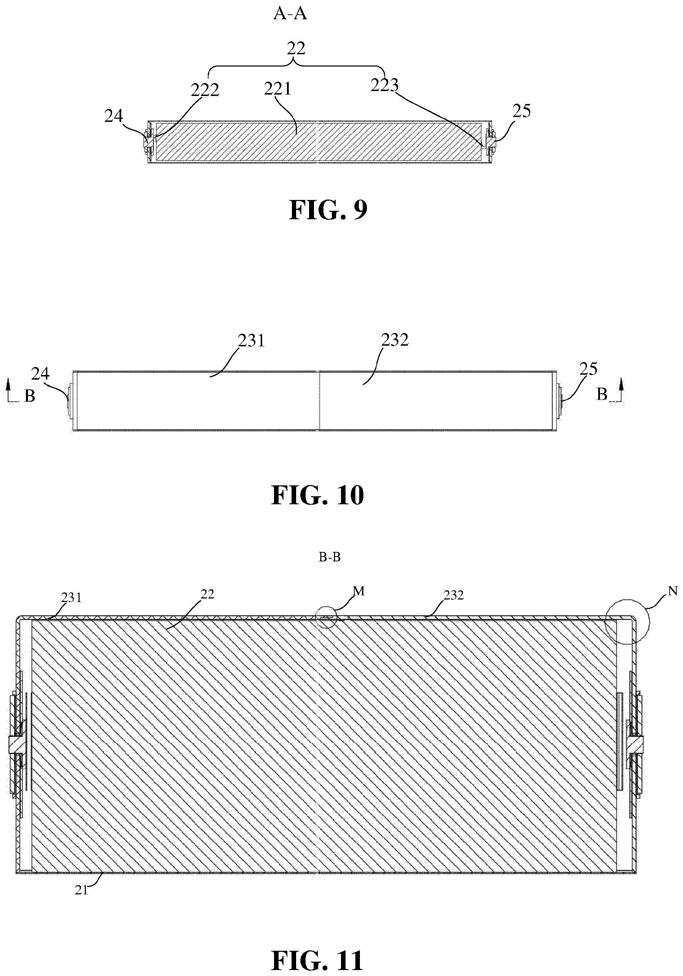

Refer to Fig. 3, Fig. 3 is a perspective schematic structural view of a battery cell 20 according to some embodiments of the present application. As shown in Fig. 3 and refer to Fig. 9, the battery cell 20 includes a case 21, an electrode assembly 22, an end cover 23, a first terminal post 24, a second terminal post 25, and other functional components.

The case 21 is an assembly that forms an internal environment of the battery cell 20. The formed internal environment may be configured to accommodate the electrode assembly 22, electrolyte, and other components. The case 22 may be made of various materials, such as copper, iron, aluminum, stainless steel, aluminum alloy, and plastic, which is not particularly limited in the embodiments of the present application.

The electrode assembly 22 is a component of the battery cell 20, in which an electrochemical reaction occurs. The case 21 may contain one or more electrode assemblies 22. The electrode assembly 22 is mainly formed by winding or stacking a positive electrode plate and a negative electrode plate, and a separator is usually arranged between the positive electrode plate and the negative electrode plate. A part of the positive electrode plate having an active material and a part of the negative electrode plate having an active material constitute a main body part of the electrode assembly, and a part of the positive electrode plate having no active material and a part of the negative electrode plate having no active material separately constitute tabs. In charging and discharging processes of the battery, the positive electrode active material and the negative electrode active material react with the electrolyte, and the tabs are connected to the terminal posts to form a current loop.

The end cover 23 is a component covering openings of the case 21 to isolate the internal environment of the battery cell 20 from an external environment. Without limitation, a shape of the end cover 23 can be adapted to a shape of the case 21 to match the case 21. Optionally, the end cover 23 may be made of a material (such as the aluminum alloy) with certain hardness and strength, so that the end cover 23 is not easily deformed when it is pressed and collided, so that the battery cell 20 can have higher structural strength, and the safety performance can also be improved. Terminal posts are arranged on the end cover 23. The terminal posts are electrically connected to the electrode assembly 22 to output or input electric energy of the battery cell 20. In some embodiments, a pressure relief mechanism for relieving an internal pressure when the internal pressure or temperature of the battery cell 20 reaches a threshold is also arranged on the end cover 23. The end cover 23 may also be made of various materials, such as copper, iron, aluminum, stainless steel, aluminum alloy, and plastic, which is not particularly limited in the embodiments of the present application. In some embodiments, an insulating member may be arranged on an inner side of the end cover 23. The insulating member may be configured to isolate electrical connection components in the case 21 from the end cover 23, to reduce the risk of short circuit. For example, the insulating member may be plastic, rubber, or the like.

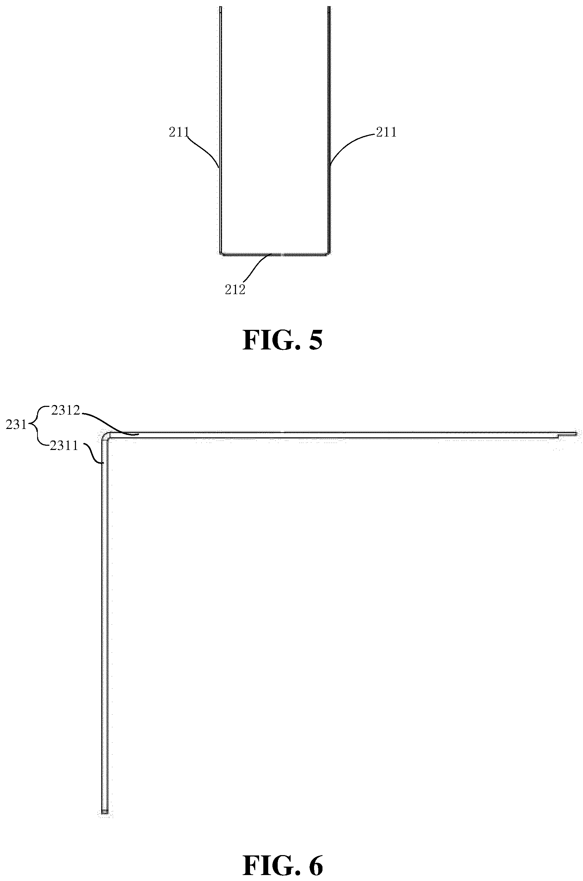

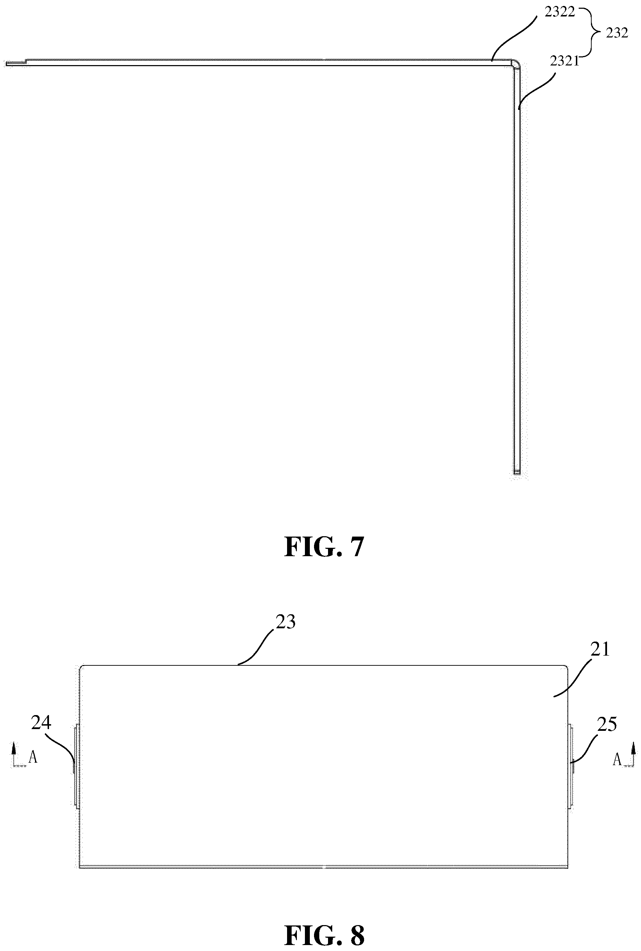

Refer to Fig. 3 to Fig. 11, Fig. 3 is a perspective schematic structural view of a battery cell 20 according to some embodiments of the present application. Fig. 4 is a front schematic structural view of a case according to some embodiments of the present application. Fig. 5 is a side schematic structural view of a case according to some embodiments of the present application. Fig. 6 is a side schematic structural view of a first end cover according to some embodiments of the present application. Fig. 7 is a side schematic structural view of a second end cover according to some embodiments of the present application. Fig. 8 is a front schematic structural view of a battery cell according to some embodiments of the present application. Fig. 9 is a sectional schematic structural view along direction A-A in Fig. 8. Fig. 10 is a top schematic structural view of a battery cell according to some embodiments of the present application. Fig. 11 is a sectional schematic structural view along direction B-B in Fig. 10.

The battery cell 20 provided according to the embodiments of the present application includes a case 21, an electrode assembly 22, an end cover 23, a first terminal post 24, and a second terminal post 25. The case 21 includes two side walls 211 perpendicular to a first direction X and spaced apart, and a bottom wall 212 perpendicular to a second direction Z and connected to the two side walls 211. The two side walls 211 and the bottom wall 212 are enclosed to form an accommodating cavity. The case 21 is provided with a first side opening and a second side opening which are opposite to each other in a third direction Y, and a top opening opposite to the bottom wall 212. The first direction X, the second direction Z, and the third direction Y are perpendicular to each other. The electrode assembly 22 is arranged in the accommodating cavity and includes a main body part 221, and a first tab 222 and a second tab 223 which extend out of the main body part 221 and have opposite polarities. The end cover 23 is connected to the case 21 to cover the first side opening, the second side opening, and the top opening to close the case 21. The first terminal post 24 and the second terminal post 25 are arranged on the end cover 23. The first terminal post 24 is electrically connected to the first tab 222, and the second terminal post 25 is electrically connected to the second tab 223.

As shown in Fig. 3, the first direction X in the figure is a thickness direction of the battery cell 20; the second direction Z is a height direction of the battery cell 20; and the third direction Y is a lengthwise direction of the battery cell 20.

As shown in Fig. 4 and Fig. 5, the case 21 includes two opposite side walls 211 and a bottom wall 212 connected to the two side walls 211. That is, the case 21 includes three wall surfaces, and the three wall surfaces are enclosed to form an accommodating cavity, and the accommodating cavity is configured to accommodate the electrode assembly 22. As shown in Fig. 5, after the battery cell has been assembled, the side walls 211 are perpendicular to the bottom wall 212, but during the assembling of the battery cell, the side walls 211 may be slightly inclined outwards relative to the bottom wall 212 to increase the degree of freedom when the electrode assembly enters the case. The case 21 only includes three wall surfaces, so that the case 21 has three openings, namely a first side opening and a second side opening which are opposite to each other in the third direction Y and a top opening opposite to the bottom wall 212. Coverage areas of the first side opening and the second side opening are smaller than areas of the side walls 211.

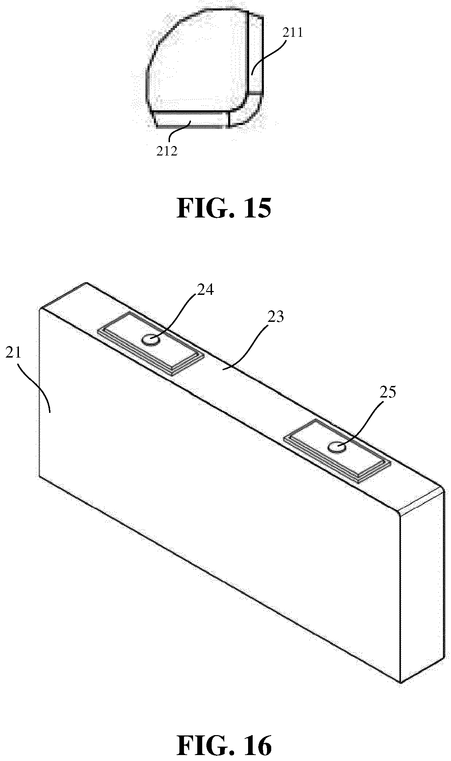

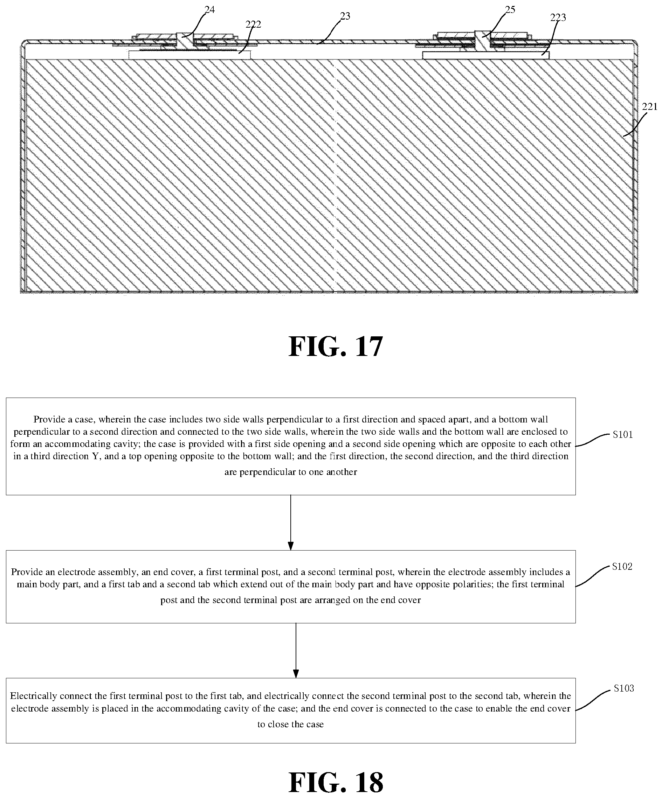

The electrode assembly 22 is arranged in the accommodating cavity and includes a main body part 221, and a first tab 222 and a second tab 223 which extend out of the main body part 221 and have opposite polarities. According to the invention, shown in Fig. 3 to Fig. 11, the first tab 222 and the second tab 223 extend out of two ends of the main body part 221 in the third direction Y, respectively. In an example, not encompassed by the wording of the claims, refer to Fig. 16 and Fig. 17, the first tab 222 and the second tab 223 may both extend out of the second direction Z of the main body part 221.

Since the case 21 is provided with the first side opening and the second side opening which are opposite to each other in the third direction Y and the top opening opposite to the bottom wall 212, the end cover 23 of the embodiments of the present application is connected to the case 21 to cover the two side openings and the top opening to close the case 21. The end cover 23 includes a first end cover 231 and a second end cover 232 to jointly cover the above two side openings and top opening.

The case 21 of the battery cell of the embodiments of the present application includes three wall surfaces: the bottom wall and the two opposite side walls. During assembling, the two side walls of the case can be inclined outwards relative to the bottom wall to form a flaring, and a moving direction of the electrode assembly does not need to be strictly perpendicular to an opening surface when the electrode assembly enters the case, thereby lowering the assembling difficulty. Moreover, the case 21 includes three openings, so that the electrode assembly 22 can enter the case in three directions. The assembling flexibility is high, which further lowers the assembling difficulty.

According to some embodiments of the present application, the case 21 is integrally formed by being bent at connections between the side walls 211 and the bottom wall 212.

Specifically, an entire flat plate may be bent and formed at the connections between the side walls 211 and the bottom wall 212 according to sizes of the side walls 211 and the bottom wall 212.

The case 21 includes the bottom wall 212 and the two opposite side walls 211, so that the case can be formed by a simple bending process, which saves stretching, aluminum extrusion, and other processes during machining of the existing case, and reduces the manufacturing cost.

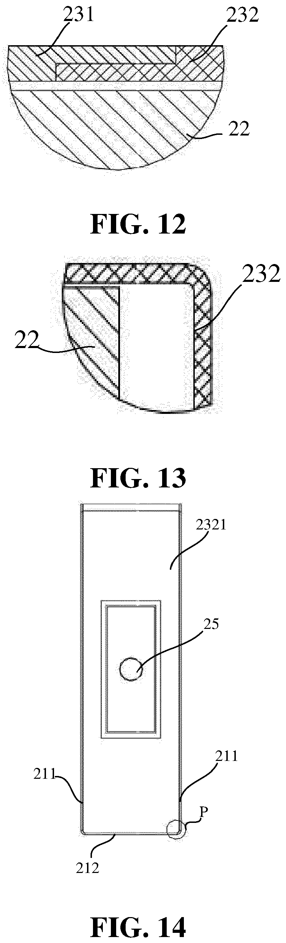

According to some embodiments of the present application, refer to Fig. 14 and Fig. 15, connections between the side walls 211 and the bottom wall 212 of the case 21 are rounded corners. That is, a bent part of the case 21 is set as a rounded corner, which is convenient for machining and avoids damage to the electrode assembly 22.

According to some embodiments of the present application, the first tab 222 and the second tab 223 extend out of two ends of the main body part 221 in the third direction Y, respectively. The end cover 23 includes a first end cover 231 provided with the first terminal post 24, and a second end cover 232 provided with the second terminal post 25. The first end cover 231 and the second end cover 232 are arranged in a split manner.

The first tab 222 and the second tab 223 extend out of the two ends of the main body part 221 in the third direction Y, respectively. Furthermore, the first end cover 231 provided with the first terminal post 24 and the second end cover 232 provided with the second terminal post 25 are arranged in the split manner. **In** a specific embodiment, as shown in Fig. 13, the first end cover 231 is of an L-shaped structure, and the first end cover 231 includes a first branch 2311 extending in the second direction Z and a second branch 2312 extending in the third direction Y. The first terminal post 24 is arranged on the first branch 2311. The second end cover 232 is also of an L-shaped structure, and the second end cover 232 includes a third branch 2321 extending in the second direction Z and a fourth branch 2322 extending in the third direction Y. The second terminal post 25 is arranged on the third branch 2321. Before assembling, both the first tab 222 and the second tab 223 of the electrode assembly 22 extend in the third direction Y. During assembling of the battery cell 20, the first branch 2311 and the first tab 222 are first arranged in parallel, and the first terminal post 24 on the first branch 2311 is then connected (for example, welded) to the first tab 222. Similarly, the third branch 2321 and the second tab 223 are arranged in parallel, and the second terminal post 25 on the third branch 2321 is connected (for example, welded) to the second tab 223. The first end cover 231 is then rotated to bend the first tab 222, and the second branch 2312 of the first end cover 231 is rotated to a position covering the top opening. Similarly, the second end cover 232 is rotated to bend the second tab 232, and the fourth branch 2322 of the second end cover 232 is rotated to a position covering the top opening, thus completing the assembling of the end cover 23 and the electrode assembly 22. The assembled end cover 23 and the electrode assembly 22 are placed in the case 21. The second branch 2312 is connected to the fourth branch 2322, and the end cover 23 is connected to the case 21, thus completing the general assembly. It can be seen that in the above embodiments, the first end cover 231 covers the first side opening and at least part of the top opening, and the second end cover 232 covers the second side opening and at least part of the top opening. In some other embodiments, the first end cover 231 may only cover the first side opening, and the second end cover 232 covers the second side opening and the top opening; or, the first end cover 231 covers the first side opening and the top opening, and the second end cover 232 covers the second side opening.

The first tab 222 and the second tab 223 respectively extend out of the two ends of the main body part 221, and the first end cover 231 and the second end cover 232 are arranged in the split manner, which can facilitate that the terminal posts and tabs on the end cover 23 rotate to achieve assembling on the case 21 after being welded.

According to some embodiments of the present application, the first end cover 231 covers the first side opening and at least part of the top opening. The second end cover 232 covers the second side opening and at least part of the top opening, and the first end cover 231 is connected to the second end cover 232.

As shown in Fig. 6, Fig. 7, and Fig. 11, the first branch 2311 of the first end cover 231 covers the first side opening, and the second branch 2312 of the first end cover 231 covers at least part of the top opening. The third branch 2321 of the second end cover 232 covers the second side opening. The fourth branch 2322 of the second end cover 232 covers at least part of the top opening. The second branch 2312 and the fourth branch 2322 are connected to cover the entire top opening.

The first end cover 231 covers the first side opening and at least part of the top opening, and the second end cover 232 covers the second side opening and at least part of the top opening. In this way, the end cover 23 is composed of two parts to cover all the openings of the case 21, thereby simplifying the welding step during the assembling.

According to some embodiments of the present application, the first end cover 231 and the second end cover 232 are arranged symmetrically.

The first end cover 231 and the second end cover 232 are arranged symmetrically, that is, a length of the second branch 2312 of the first end cover 231 and a length of the fourth branch 2322 of the second end cover 232 are equal. In this way, the first end cover 231 and the second end cover 232 have the same structural dimensions, and can be manufactured uniformly during manufacturing, thereby reducing the manufacturing cost.

Of course, in other embodiments, the length of the second branch 2312 of the first end cover 231 and the length of the fourth branch 2322 of the second end cover 232 can also be set to be unequal as required.

According to some embodiments of the present application, the first end cover 231 includes a first branch 2311 covering the first side opening, and a second branch 2312 covering at least part of the top opening. The second end cover 232 includes a third branch 2321 covering the second side opening, and a fourth branch 2322 covering at least part of the top opening. The first terminal post 24 is arranged on the first branch 2311. The second terminal post 25 is arranged on the third branch 2321, and the second branch 2312 is connected to the fourth branch 2322.

The end cover 23 includes the first end cover 231 and the second end cover 232. The first terminal post 24 on the first end cover 231 is connected to the first tab 222, and the second terminal post on the second end cover 232 is connected to the second tab 223. The second branch 2312 is connected to the fourth branch 2322 to achieve assembling between the end cover 23 and the electrode assembly 22, so that the assembling process is simple.

According to some embodiments of the present application, a connecting end of the second branch 2312 is in concave-convex fit with a connecting end of the fourth branch 2322.

Specifically, as shown in Fig. 6, Fig. 7, and Fig. 12, the connecting end of the second branch 2312 is provided with a first stepped surface, and the connecting end of the fourth branch 2322 is provided with a second stepped surface. During assembling and connection of the third branch 2312 and the fourth branch 2322, two vertical surfaces of the first stepped surface abut against two vertical surfaces of the second stepped surface respectively, thereby achieving positioning in the third direction Y during connection between third branch 2312 and the fourth branch 2322. In this way, a sealing effect is achieved by the connection between the third branch 2312 and the fourth branch 2322, to prevent electrolyte leakage.

The connecting end of the second branch 2312 is in concave-convex fit with the connecting end of the fourth branch 2322 to achieve precise positioning and matching of the second branch 2312 and the fourth branch 2322, thereby preventing the electrolyte leakage.

According to some embodiments of the present application, refer to Fig. 6, a connection between the first branch 2311 and the second branch 2312 is a rounded corner. The connection between the first branch 2311 and the second branch 2312 is set to be the rounded corner, so that during connection and assembling of the first end cover 231 and the electrode assembly 22, damage to the electrode assembly and injury to assembling personnel can be avoided.

According to some embodiments of the present application, refer to Fig. 7 and Fig. 13, a connection between the third branch 2321 and the fourth branch 2322 is a rounded corner. The connection between the third branch 2321 and the fourth branch 2322 is the rounded corner, which can also avoid damage to the electrode assembly and injury to the assembling personnel.

Specifically, as shown in Fig. 4, intersection positions 211a of the two side walls 211 are both rounded corners. The connection between the first branch 2311 and the second branch 2312 is the rounded corner, and the connection between the third branch 2321 and the fourth branch 2322 is the rounded corner. In this way, during assembling of the first end cover 231 and the case 21, the rounded corners at the intersection positions of the side walls 211 match the rounded corners of the bent parts of the first end cover 231. Meanwhile, when the electrode assembly 22 enters the case, the intersection positions 211a of the side walls 211 are set to be the rounded corners, which can also further avoid the damage to the electrode assembly and the injury to the assembling personnel.

According to some embodiments of the present application, connections between the first branch 2311 and/or the third branch 2321 and the side walls 211 are right angles.

Specifically as shown in Fig. 3, a bottom edge of the first branch 2311 of the first end cover 231 is connected to the bottom wall 212 of the case 21 through external welding (for example, laser welding), so that a connection between the first branch 2311 and the bottom wall 212 is a right angle. Similarly, a bottom edge of the third branch 2321 of the second end cover 232 is connected to the bottom wall 212 of the case 21 through external welding (for example, laser welding), so that a connection between the third branch 2321 and the bottom wall 212 is a right angle.

The connection between the first branch 2311 and/or the third branch 2321 and the bottom wall 212 is set to be the right angle, which avoids formation of rounded corners at intersection positions of the case formed by a traditional stretching process, and reduces interference between the rounded corners and the electrode assembly; the space utilization rate of the case can be improved; and the energy density of the battery cell can be increased.

Specifically, in the embodiment shown in Fig. 3, the connections between the first branch 2311 of the first end cover 231 and the two side walls 211 of the case 21 are set to be the right angles. The connections between the third branch 2321 of the second end cover 232 and the two side walls 211 of the case 21 are set to be the right angles. In this way, the space utilization rate of the case is further improved, and the energy density of the battery cell is increased.

According to an example, not encompassed by the wording of the claims, refer to Fig. 16 and Fig. 17, both the first tab 222 and the second tab 223 extend out of the main body part 221 towards one side of the top opening. The end cover 23 is of a groove structure and includes two side cover parts covering the two side openings and a top cover part covering the top opening; and the first terminal post 24 and the second terminal post 25 are both arranged on the top cover part.

Both the first tab 222 and the second tab 223 extend out of the main body part 221 towards one side of the top opening. Before assembly, the first tab 222 and the second tab 223 extend in the second direction Z. During assembling of the battery cell, firstly, the top cover part of the end cover 23 is arranged in parallel to the first tab 222 and the second tab 223; the first terminal post 24 on the end cover 23 is connected to the first tab 222, and the second terminal post 25 is connected to the second tab 223; then the end cover 23 is rotated to bend the tabs, to complete the assembling of the end cover 23 and the electrode assembly 22; then, the end cover 23 and the electrode assembly 22 are put into the case 21, and the end cover 23 is connected to the case 21, to complete the assembling of the battery cell 20.

The first tab 222 and the second tab 223 extend out of one side of the main body part 221, so that the end cover 23 of the groove structure can be directly assembled with the electrode assembly 22 without setting the end cover 23 into two separate structures, thus reducing the step of connecting the two split structures of the end cover 23 and simplifying the assembling process.

According to an example, not encompassed by the wording of the claims, the end cover 23 is integrally formed. For example, the end cover can be obtained by bending at connections between the top cover part and the side cover parts.

According to some embodiments of the present application, the present application further provides a battery, including the battery cell of any one of the solutions above.

According to some embodiments of the present application, the present application further provides an electrical apparatus, including the battery of any one of the above solutions. The battery is configured to provide electric energy to the electrical apparatus.

The electrical apparatus may be a device or system applying any battery above.

Refer to Fig. 18, according to some embodiments of the present application, the present application further provides a manufacturing method of a battery cell, including the following steps:
S101, providing a case 21, wherein the case 21 includes two side walls 211 perpendicular to a first direction X and spaced apart, and a bottom wall 212 perpendicular to a second direction Z and connected to the two side walls 211, wherein the two side walls 211 and the bottom wall 212 are enclosed to form an accommodating cavity; the case 21 is provided with a first side opening and a second side opening which are opposite to each other in a third direction Y, and a top opening opposite to the bottom wall 212; the first direction X, the second direction Z, and the third direction Y are perpendicular to one another; and
S102, providing an electrode assembly 22, an end cover 23, a first terminal post 24, and a second terminal post 25, wherein the electrode assembly 22 includes a main body part 221, and a first tab 222 and a second tab 223 which extend out of the main body part 221 and have opposite polarities; the first terminal post 24 and the second terminal post 25 are arranged on the end cover 23; and
S103, electrically connecting the first terminal post 24 to the first tab 222, and electrically connecting the second terminal post 25 to the second tab 223, wherein the electrode assembly 22 is placed in the accommodating cavity of the case 21; and the end cover 23 is connected to the case 21 to enable the end cover 23 to close the case 21.

The case 21 of the battery cell of the embodiments of the present application includes three wall surfaces: the bottom wall and the two opposite side walls. During assembling, the two side walls of the case can be inclined outwards relative to the bottom wall to form a flaring, and a moving direction of the electrode assembly does not need to be strictly perpendicular to an opening surface when the electrode assembly enters the case, thereby lowering the assembling difficulty.

Although the present application has been described with reference to the preferred embodiments, improvements and modifications of the embodiments described above may be made, within the scope of the appended claims. The present application is not limited to the specific embodiments disclosed herein, but includes all technical solutions falling within the scope of the claims.

## Claims

1. A battery cell, comprising:
a case (21), comprising two side walls (211) perpendicular to a first direction (X) and spaced apart, and a bottom wall (212) perpendicular to a second direction (Z) and connected to the two side walls (211), wherein the two side walls (211) and the bottom wall (212) are enclosed to form an accommodating cavity; the case (21) is provided with a first side opening and a second side opening which are opposite to each other in a third direction (Y), and a top opening opposite to the bottom wall (212); the first direction (X), the second direction (Z), and the third direction (Y) are perpendicular to one another;
an electrode assembly (22), arranged in the accommodating cavity and comprising a main body part (221), and a first tab (222) and a second tab (223) which extend from two ends of the main body part (221) in the third direction (Y) and have opposite polarities;
an end cover (23), connected with the case (21) to cover the first side opening, the second side opening, and the top opening to close the case (21); and
a first terminal post (24) and a second terminal post (25), arranged on the end cover (23), wherein the first terminal post (24) is electrically connected to the first tab (222), and the second terminal post (25) is electrically connected to the second tab (223),
**characterized in that**
the end cover (23) comprises a first end cover (231) provided with the first terminal post (24) and a second end cover (232) provided with the second terminal post (25),
the first end cover (231) and the second end cover (232) are arranged in a split manner.

2. The battery cell according to claim 1, wherein the case (21) is integrally formed by being bent at connections between the side walls (211) and the bottom wall (212).

3. The battery cell according to claim 1, wherein the first end cover (231) covers the first side opening and at least part of the top opening, and the second end cover (232) covers the second side opening and at least part of the top opening; and the first end cover (231) is connected to the second end cover (232).

4. The battery cell according to claim 3, wherein the first end cover (231) and the second end cover (232) are arranged symmetrically.

5. The battery cell according to claim 3, wherein the first end cover (231) comprises a first branch (2311) covering the first side opening, and a second branch (2312) covering at least part of the top opening; the second end cover (232) comprises a third branch (2321) covering the second side opening and a fourth branch (2322) covering at least part of the top opening; the first branch (2311) is provided with the first terminal post (24); the third branch (2321) is provided with the second terminal post (25); and the second branch (2312) is connected to the fourth branch (2322).

6. The battery cell according to claim 5, wherein a connecting end of the second branch (2312) is in concave-convex fit with a connecting end of the fourth branch (2322).

7. The battery cell according to claim 5, wherein a connection between the first branch (2311) and the second branch (2312) is a rounded corner; and/or, a connection between the third branch (2321) and the fourth branch (2322) is a rounded corner.

8. The battery cell according to claim 5, wherein a connection between the first branch (2311) and/or the third branch (2321) and the bottom wall (212) is a right angle.

9. The battery cell according to claim 1, wherein both the first tab (222) and the second tab (223) extend out of the main body part (221) towards one side of the top opening; the end cover (23) is of a groove structure and comprises two side cover parts covering the two side openings and a top cover part covering the top opening; and the first terminal post (24) and the second terminal post (25) are both arranged on the top cover part.

10. The battery cell according to any one of claims 1 to 9, wherein connections between the side walls (211) and the bottom wall (212) of the case (21) are rounded corners.

11. A battery, comprising the battery cell according to any one of claims 1 to 10.

12. An electrical apparatus, comprising the battery according to claim 11, wherein the battery is configured to provide electric energy.

13. A manufacturing method of a battery cell, comprising the following steps:
providing (S101) a case (21), wherein the case (21) comprises two side walls (211) perpendicular to a first direction (X) and spaced apart, and a bottom wall (212) perpendicular to a second direction (Z) and connected to the two side walls (211), wherein the two side walls (211) and the bottom wall (212) are enclosed to form an accommodating cavity; the case (21) is provided with a first side opening and a second side opening which are opposite to each other in a third direction (Y), and a top opening opposite to the bottom wall (212); the first direction (X), the second direction (Z), and the third direction (Y) are perpendicular to one another; and
providing (S102) an electrode assembly (22), an end cover (23), a first terminal post (24), and a second terminal post (25), wherein the electrode assembly (22) comprises a main body part (221), and a first tab (222) and a second tab (223) which extend from two ends of the main body part (221) in the third direction (Y) and have opposite polarities; the first terminal post (24) and the second terminal post (25) are arranged on the end cover (23); the first terminal post (24) is electrically connected (S103) to the first tab (222), and the second terminal post (25) is electrically connected (S103) to the second tab (223); the end cover (23) comprises a first end cover (231) provided with the first terminal post (24) and a second end cover (232) provided with the second terminal post (25); the first end cover (231) and the second end cover (232) are arranged in a split manner; the electrode assembly (22) is placed in the accommodating cavity of the case (21); and the end cover (23) is connected to the case (21) to enable the end cover (23) to close the case (21).

## Patentansprüche

1. Batteriezelle, umfassend:
ein Gehäuse (21), umfassend zwei Seitenwände (211), die senkrecht zu einer ersten Richtung (X) stehen und voneinander beabstandet sind, und eine Bodenwand (212), die senkrecht zu einer zweiten Richtung (Z) steht und mit den zwei Seitenwänden (211) verbunden ist, wobei die zwei Seitenwände (211) und die Bodenwand (212) eingeschlossen sind, um einen Aufnahmehohlraum auszubilden; das Gehäuse (21) mit einer ersten Seitenöffnung und einer zweiten Seitenöffnung bereitgestellt ist, die einander in einer dritten Richtung (Y) gegenüberliegen, sowie mit einer oberen Öffnung, die der Bodenwand (212) gegenüberliegt; die erste Richtung (X), die zweite Richtung (Z) und die dritte Richtung (Y) senkrecht zueinander stehen;
eine Elektrodenanordnung (22), die in dem Aufnahmehohlraum angeordnet ist und einen Hauptkörperteil (221) und eine erste Lasche (222) und eine zweite Lasche (223) umfasst, die sich von zwei Enden des Hauptkörperteils (221) in der dritten Richtung (Y) erstrecken und entgegengesetzte Polaritäten aufweisen;
eine Endabdeckung (23), die mit dem Gehäuse (21) verbunden ist, um die erste Seitenöffnung, die zweite Seitenöffnung und die obere Öffnung abzudecken und das Gehäuse (21) zu schließen; und
einen ersten Anschlussstift (24) und einen zweiten Anschlussstift (25), die an der Endabdeckung (23) angeordnet sind, wobei der erste Anschlussstift (24) mit der ersten Lasche (222) elektrisch verbunden ist und der zweite Anschlussstift (25) mit der zweiten Lasche (223) elektrisch verbunden ist,
**dadurch gekennzeichnet, dass**
die Endabdeckung (23) eine erste Endabdeckung (231) umfasst, die mit dem ersten Anschlussstift (24) bereitgestellt ist, und eine zweite Endabdeckung (232) umfasst, die mit dem zweiten Anschlussstift (25) bereitgestellt ist,
die erste Endabdeckung (231) und die zweite Endabdeckung (232) geteilt angeordnet sind.

2. Batteriezelle nach Anspruch 1, wobei das Gehäuse (21) durch Biegen an Verbindungen zwischen den Seitenwänden (211) und der Bodenwand (212) einstückig ausgebildet ist.

3. Batteriezelle nach Anspruch 1, wobei die erste Endabdeckung (231) die erste Seitenöffnung und mindestens einen Teil der oberen Öffnung abdeckt und die zweite Endabdeckung (232) die zweite Seitenöffnung und mindestens einen Teil der oberen Öffnung abdeckt; und die erste Endabdeckung (231) mit der zweiten Endabdeckung (232) verbunden ist.

4. Batteriezelle nach Anspruch 3, wobei die erste Endabdeckung (231) und die zweite Endabdeckung (232) symmetrisch angeordnet sind.

5. Batteriezelle nach Anspruch 3, wobei die erste Endabdeckung (231) einen ersten Zweig (2311) umfasst, der die erste Seitenöffnung abdeckt, und einen zweiten Zweig (2312) umfasst, der mindestens einen Teil der oberen Öffnung abdeckt; die zweite Endabdeckung (232) einen dritten Zweig (2321) umfasst, der die zweite Seitenöffnung abdeckt, und einen vierten Zweig (2322) umfasst, der mindestens einen Teil der oberen Öffnung abdeckt; der erste Zweig (2311) mit dem ersten Anschlussstift (24) bereitgestellt ist; der dritte Zweig (2321) mit dem zweiten Anschlussstift (25) bereitgestellt ist; und der zweite Zweig (2312) mit dem vierten Zweig (2322) verbunden ist.

6. Batteriezelle nach Anspruch 5, wobei ein Verbindungsende des zweiten Zweigs (2312) in konkav-konvexer Passung mit einem Verbindungsende des vierten Zweigs (2322) steht.

7. Batteriezelle nach Anspruch 5, wobei eine Verbindung zwischen dem ersten Zweig (2311) und dem zweiten Zweig (2312) eine abgerundete Ecke ist; und/oder eine Verbindung zwischen dem dritten Zweig (2321) und dem vierten Zweig (2322) eine abgerundete Ecke ist.

8. Batteriezelle nach Anspruch 5, wobei eine Verbindung zwischen dem ersten Zweig (2311) und/oder dem dritten Zweig (2321) und der Bodenwand (212) einen rechten Winkel bildet.

9. Batteriezelle nach Anspruch 1, wobei sich sowohl die erste Lasche (222) als auch die zweite Lasche (223) aus dem Hauptkörperteil (221) in Richtung einer Seite der oberen Öffnung erstrecken; die Endabdeckung (23) einer Nutstruktur angehört und zwei Seitenabdeckungsteile umfasst, die die zwei Seitenöffnungen abdecken, und einen oberen Abdeckungsteil umfasst, der die obere Öffnung abdeckt; und der erste Anschlussstift (24) und der zweite Anschlussstift (25) beide auf dem oberen Abdeckungsteil angeordnet sind.

10. Batteriezelle nach einem der Ansprüche 1 bis 9, wobei die Verbindungen zwischen den Seitenwänden (211) und der Bodenwand (212) des Gehäuses (21) abgerundete Ecken sind.

11. Batterie, umfassend die Batteriezelle nach einem der Ansprüche 1 bis 10.

12. Elektrische Vorrichtung, umfassend die Batterie nach Anspruch 11, wobei die Batterie so konfiguriert ist, dass sie elektrische Energie bereitstellt.

13. Verfahren zur Herstellung einer Batteriezelle, umfassend die folgenden Schritte:
Bereitstellen (S101) eines Gehäuses (21), wobei das Gehäuse (21) zwei Seitenwände (211) umfasst, die senkrecht zu einer ersten Richtung (X) stehen und voneinander beabstandet sind, und eine Bodenwand (212) umfasst, die senkrecht zu einer zweiten Richtung (Z) steht und mit den zwei Seitenwänden (211) verbunden ist, wobei die zwei Seitenwände (211) und die Bodenwand (212) eingeschlossen sind, um einen Aufnahmehohlraum auszubilden; das Gehäuse (21) mit einer ersten Seitenöffnung und einer zweiten Seitenöffnung bereitgestellt ist, die einander in einer dritten Richtung (Y) gegenüberliegen, sowie mit einer oberen Öffnung, die der Bodenwand (212) gegenüberliegt; die erste Richtung (X), die zweite Richtung (Z) und die dritte Richtung (Y) senkrecht zueinander stehen; und
Bereitstellen (S102) einer Elektrodenanordnung (22), einer Endabdeckung (23), eines ersten Anschlussstifts (24) und eines zweiten Anschlussstifts (25), wobei die Elektrodenanordnung (22) ein Hauptkörperteil (221) und eine erste Lasche (222) und eine zweite Lasche (223) umfasst, die sich von zwei Enden des Hauptkörperteils (221) in der dritten Richtung (Y) erstrecken und entgegengesetzte Polaritäten aufweisen; der erste Anschlussstift (24) und der zweite Anschlussstift (25) auf der Endabdeckung (23) angeordnet sind; der erste Anschlussstift (24) mit der ersten Lasche (222) elektrisch verbunden ist (S103) und der zweite Anschlussstift (25) mit der zweiten Lasche (223) elektrisch verbunden ist (S103); die Endabdeckung (23) eine erste Endabdeckung (231) umfasst, die mit dem ersten Anschlussstift (24) bereitgestellt ist, und eine zweite Endabdeckung (232) umfasst, die mit dem zweiten Anschlussstift (25) bereitgestellt ist; die erste Endabdeckung (231) und die zweite Endabdeckung (232) geteilt angeordnet sind; die Elektrodenanordnung (22) in dem Aufnahmehohlraum des Gehäuses (21) platziert ist; und die Endabdeckung (23) mit dem Gehäuse (21) verbunden ist, um die Endabdeckung (23) das Gehäuse (21) verschließen zu können.

## Revendications

1. Élément de batterie, l'élément comprenant :
un boîtier (21), le boîtier comprenant deux parois latérales (211) perpendiculaires à une première direction (X) et espacées l'une de l'autre, et une paroi inférieure (212) perpendiculaire à une deuxième direction (Z) et reliée aux deux parois latérales (211), les deux parois latérales (211) et la paroi inférieure (212) étant délimitées afin de former une cavité de logement ; le boîtier (21) est muni d'une première ouverture latérale et d'une seconde ouverture latérale qui sont opposées l'une à l'autre dans une troisième direction (Y), et d'une ouverture supérieure opposée à la paroi inférieure (212) ; la première direction (X), la deuxième direction (Z) et la troisième direction (Y) sont perpendiculaires les unes aux autres ;
un ensemble électrode (22), agencé dans la cavité de logement et comprenant une partie corps principal (221), et une première languette (222) et une seconde languette (223) s'étendant à partir de deux extrémités de la partie corps principal (221) dans la troisième direction (Y) et présentant des polarités opposées ;
un couvercle d'extrémité (23), relié au boîtier (21) de façon à recouvrir la première ouverture latérale, la seconde ouverture latérale et l'ouverture supérieure afin de fermer le boîtier (21) ; et
une première borne (24) et une seconde borne (25), agencées sur le couvercle d'extrémité (23), la première borne (24) étant connectée électriquement à la première languette (222), et la seconde borne (25) étant connectée électriquement à la seconde languette (223),
**caractérisé en ce que**
le couvercle d'extrémité (23) comprend un premier couvercle d'extrémité (231) muni de la première borne (24) et un second couvercle d'extrémité (232) muni de la seconde borne (25),
le premier couvercle d'extrémité (231) et le second couvercle d'extrémité (232) sont agencés de manière divisée.

2. L'élément de batterie selon la revendication 1, dans lequel le boîtier (21) est formé en une seule pièce au moyen de son pliage au niveau des liaisons entre les parois latérales (211) et la paroi inférieure (212).

3. L'élément de batterie selon la revendication 1, dans lequel le premier couvercle d'extrémité (231) recouvre la première ouverture latérale et au moins une partie de l'ouverture supérieure, et le second couvercle d'extrémité (232) recouvre la seconde ouverture latérale et au moins une partie de l'ouverture supérieure ; et le premier couvercle d'extrémité (231) est relié au second couvercle d'extrémité (232).

4. L'élément de batterie selon la revendication 3, dans lequel le premier couvercle d'extrémité (231) et le second couvercle d'extrémité (232) sont agencés de manière symétrique.

5. L'élément de batterie selon la revendication 3, dans lequel le premier couvercle d'extrémité (231) comprend une première branche (2311) recouvrant la première ouverture latérale, et une deuxième branche (2312) recouvrant au moins une partie de l'ouverture supérieure ; le second couvercle d'extrémité (232) comprend une troisième branche (2321) recouvrant la seconde ouverture latérale et une quatrième branche (2322) recouvrant au moins une partie de l'ouverture supérieure ; la première branche (2311) est munie de la première borne (24) ; la troisième branche (2321) est munie de la seconde borne (25) ; et la deuxième branche (2312) est reliée à la quatrième branche (2322).

6. L'élément de batterie selon la revendication 5, dans lequel une extrémité de liaison de la deuxième branche (2312) est en ajustement concavo-convexe avec une extrémité de liaison de la quatrième branche (2322).

7. L'élément de batterie selon la revendication 5, dans lequel une liaison entre la première branche (2311) et la deuxième branche (2312) est un coin arrondi ; et/ou une liaison entre la troisième branche (2321) et la quatrième branche (2322) est un coin arrondi.

8. L'élément de batterie selon la revendication 5, dans lequel une liaison entre la première branche (2311) et/ou la troisième branche (2321) et la paroi inférieure (212) est un angle droit.

9. L'élément de batterie selon la revendication 1, dans lequel la première languette (222) et la seconde languette (223) s'étendent toutes les deux hors de la partie corps principal (221) vers un côté de l'ouverture supérieure ; le couvercle d'extrémité (23) est de structure à rainures et comprend deux parties couvercle latéral recouvrant les deux ouvertures latérales et une partie couvercle supérieur recouvrant l'ouverture supérieure ; et la première borne (24) et la seconde borne (25) sont toutes les deux agencées sur la partie couvercle supérieur.

10. L'élément de batterie selon l'une quelconque des revendications 1 à 9, dans lequel les liaisons entre les parois latérales (211) et la paroi inférieure (212) du boîtier (21) sont des coins arrondis.

11. Batterie comprenant l'élément de batterie selon l'une quelconque des revendications 1 à 10.

12. Appareil électrique comprenant la batterie selon la revendication 11, la batterie étant conçue pour fournir de l'énergie électrique.

13. Procédé de fabrication d'un élément de batterie, le procédé comprenant les étapes suivantes :
l'utilisation (S101) d'un boîtier (21), le boîtier (21) comprenant deux parois latérales (211) perpendiculaires à une première direction (X) et espacées l'une de l'autre, et une paroi inférieure (212) perpendiculaire à une deuxième direction (Z) et reliée aux deux parois latérales (211), les deux parois latérales (211) et la paroi inférieure (212) étant délimitées afin de former une cavité de logement ; le boîtier (21) est muni d'une première ouverture latérale et d'une seconde ouverture latérale qui sont opposées l'une à l'autre dans une troisième direction (Y), et d'une ouverture supérieure opposée à la paroi inférieure (212) ; la première direction (X), la deuxième direction (Z) et la troisième direction (Y) sont perpendiculaires les unes aux autres ; et
l'utilisation (S102) d'un ensemble électrode (22), d'un couvercle d'extrémité (23), d'une première borne (24) et d'une seconde borne (25) ; l'ensemble électrode (22) comprend une partie corps principal (221), et une première languette (222) et une seconde languette (223) s'étendant à partir de deux extrémités de la partie corps principal (221) dans la troisième direction (Y) et présentant des polarités opposées ; la première borne (24) et la seconde borne (25) sont agencées sur le couvercle d'extrémité (23) ; la première borne (24) est connectée électriquement (S103) à la première languette (222), et la seconde borne (25) est connectée électriquement (S103) à la seconde languette (223) ; le couvercle d'extrémité (23) comprend un premier couvercle d'extrémité (231) muni de la première borne (24) et un second couvercle d'extrémité (232) muni de la seconde borne (25) ; le premier couvercle d'extrémité (231) et le second couvercle d'extrémité (232) sont agencés de manière divisée ; l'ensemble électrode (22) est placé dans la cavité de logement du boîtier (21) ; et le couvercle d'extrémité (23) est relié au boîtier (21) afin de permettre au couvercle d'extrémité (23) de fermer le boîtier (21).
